(19) **Europäisches Patentamt**

**European Patent Office**

**Office européen des brevets**

(11) **EP 1 425 217 B1**

(12) **EUROPEAN PATENT SPECIFICATION**

(45) Date of publication and mention
of the grant of the patent:
**06.09.2006 Bulletin 2006/36**

(21) Application number: **01274423.1**

(22) Date of filing: **04.12.2001**

(51) Int Cl.:
***B64C 23/00*** (2006.01)    ***B64C 21/02*** (2006.01)

(86) International application number:
**PCT/IB2001/002295**

(87) International publication number:
**WO 2003/013957 (20.02.2003 Gazette 2003/08)**

(54) **AERODYNAMIC BODY PROVIDED WITH SURFACE CAVITIES**

MIT OBERFLÄCHENKAVITÄTEN VERSEHENER AERODYNAMISCHER KÖRPER

CORPS AERODYNAMIQUE PRESENTANT DES CAVITES DE SURFACE

(84) Designated Contracting States:
**AT BE CH CY DE DK ES FI FR GB GR IE IT LI LU
MC NL PT SE TR**

(30) Priority: **10.08.2001 IT RM20010501**

(43) Date of publication of application:
**09.06.2004 Bulletin 2004/24**

(73) Proprietor: **UNIVERSITA' DEGLI STUDI DI ROMA
"LA SAPIENZA"
00185 Roma (IT)**

(72) Inventors:
  • **GAMMA, Fausto
  00124 Roma (IT)**
  • **SCIUBBA, Enrico
  I-00042 Anzio (IT)**
  • **ZINGARO, Domenico
  I-86040 Macchia Valfortore (CB) (IT)**

(74) Representative: **Gervasi, Gemma
Notarbartolo & Gervasi S.p.A.,
Corso di Porta Vittoria, 9
20122 Milano (IT)**

(56) References cited:
**FR-A- 2 051 956        JP-A- 2000 199 505
US-A- 3 774 867        US-A- 4 619 423**

**Description**

Field of the invention

The present invention concerns an aerodynamic body with an aerodynamically shaped outer surface which, due to its shape, can vary both the lift and the drag of the body itself. In practice the body can take the form of ailerons, air brakes, stabilizers or control elements and aerodynamic appendixes in general.

Previous technology

One of the main problems of racing cars, and in particular of formula racing cars, with exposed wheels, consists in the creation of a braking system that combines the requirements of lightness, reliability, easy access and high power. Some of these requirements are obviously contradictory: for this reason, considerable resources are dedicated every year to the design and production of new or renewed braking systems. On the other hand, the outer shape of the vehicle bodywork must comply with stringent aerodynamic specifications, which entail a low $c_X$, a high lateral stability and an attitude generally with negative lift, all devices that increase the driveability of the vehicle. Regulations permit the addition of wing-shaped aerodynamic appendixes, known as spoilers, which can be adjusted according to the characteristics of the track, to optimise the combination of good manoeuvrability with high negative lift, low top speed, good behaviour on mixed courses and good top speed with low negative lift, high top speed and poor stability on mixed courses.

An idea already tested out in Formula 1 car racing is to construct the aerodynamic appendix of the vehicle so that it can also perform a braking and negative lift function as required by the driver (mobile aileron). Following serious accidents caused by detachment of the aileron, this solution was subsequently prohibited: the 2000/2001 regulations permit the use of aerodynamic appendixes on the outside of the vehicle body only if said surfaces are fixed, i.e. they cannot be adjusted unless the vehicle is at a standstill. The "adjustment" to which the regulations refer is the inclination: a variation in the setting angle of the stabiliser with respect to the roadway produces a variation in the angle of attack and a consequent variation in the lift.

One aim of the present invention is to provide a device to vary the lift and if necessary the braking capacity of a stabiliser, aileron or aerodynamic appendix, with fixed setting angle.

Said problem is solved by an airfoil having an external surface designed to be skimmed by a fluid in relative movement with it in a predetermined direction, and comprising at least one cavity provided with an aperture in correspondence of said external surface, said aperture being defined by a first edge upstream of said cavity, in the direction of the fluid flow with respect to the external surface, and a second edge downstream of said cavity, said first and second edges being arranged substantially transversally to said predetermined direction of relative movement, characterised in that said first edge is in a reentrant position with respect to said second edge by a pre-determined distance with reference to said external surface,

    a) in correspondence of at least one cavity (1), there is provided an area (5) located upstream of said first edge (7), which is gradually reentrant from said external surface towards the respective cavity (1) in order to divert part of the flow of the fluid F, which skims the outer surface, into the respective cavity,
    b) said at least one cavity (1) has a section, on a plane parallel to the direction of the fluid (F), with substantially squat and/or rounded shape,
    c) said at least one cavity is located on the side of the airfoil producing positive pressure (PS) during its movement in the fluid (F),
    d) whereby the flow outgoing from the cavity interfers with the boundary layer on the surface of the aerofoil, thus generating turbulence and increasing the drag of the aerofoil.

Such cavities are known from US-A-4 619 423, which shows all the features of the preamble of claim 1.

In this way, part of the fluid skimming the surface outside the cavity is diverted inside the cavity, sets up a vortex and flows out of it in a substantially intermittent manner, in such a way that it is not possible to describe the phenomenon with steady-state methods and models. The air flows out in a jet transversally to the cavity inflow and to the incoming external flow that skims the outer surface; said jet introduces additional turbulence in said flow.

By making a number of cavities defined as above on the pressure side of a airfoil profile or any aerodynamic element of an aircraft, vehicle or vessel, the turbulence of the various cavities increases the drag on the aerodynamic element. The area of the airfoil where the cavities are provided according to the invention will depend on the required effects on the dynamic behaviour of the vehicle or aircraft.

With very simple forms and a limited number of components, it is possible to create cavities with varying shapes and therefore with varying braking capacity; they can therefore be applied to obtain a variation in the drag and lift on larger aerodynamic elements such as wings and ailerons, the latter remaining with fixed setting angle, and thus being structurally stronger, with all consequent benefits in terms of economy, reliability and maintenance. In a particular embodiment of the invention, the cavities are closed by partitions or shutters, thus permitting elimination of the drag whenever deemed necessary.

A further embodiment of the invention provides for a mechanism driven by electrical, hydraulic or mechanical devices that reduces or increases the difference in level between the two edges, front and rear, of the cavity/cavities according to the movement requirements of the vehicle or aircraft on which the airfoil is applied in accordance with the invention.

List of figures

Further advantages that can be obtained with the present invention will become more apparent to a person skilled in the art, from the following detailed description by way of example of a particular non-limiting embodiment, with reference to the following figures, in which:

Figure 1 shows schematically the distribution of the pressure exerted on a cross section of a airfoil profile of known type and immersed in a flowing fluid;

Figure 2 shows schematically the conventional physical-geometrical quantities in the study of forces acting on a airfoil profile of the known art;

Figure 3 shows schematically in cross section the detail of a preferred embodiment of an airfoil according to the invention;

Figure 4 shows schematically a distribution of the speed vectors at some points and near the cavity of the airfoil of Figure 3;

Figures 5a, 5b show schematically a second preferred embodiment of an airfoil according to the present invention;

Figure 6 shows a third preferred embodiment of an airfoil according to the present invention.

Detailed description

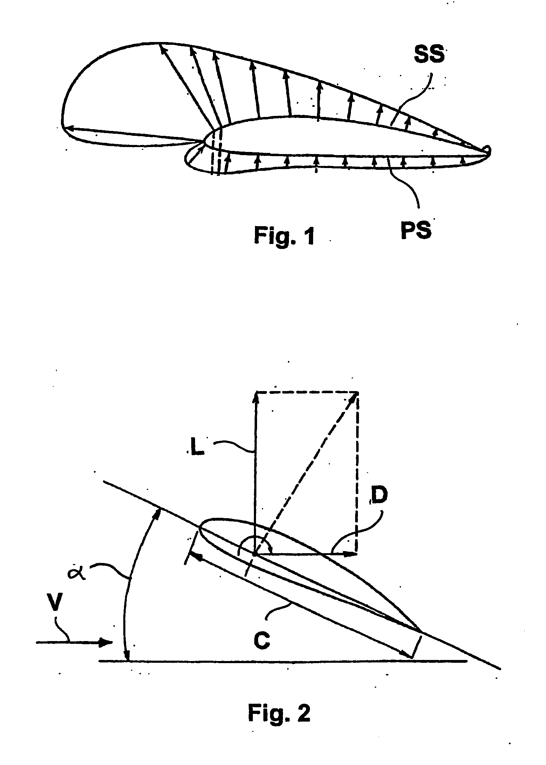

With reference to Figures 1 and 2, certain basic concepts and conventions of aerodynamics are summarised: when a wing section is immersed in a fluid F and moves in relation to it, a lift is generated on the wing section due to the different variation in the momentum of the fluid particles on the side PS with positive pressure with respect to those on the side SS with negative pressure. The air stream near the surface SS with negative pressure has a greater speed than the one flowing on PS, and the relative pressures acting locally on each area of the surface will be consequently higher on the side PS with positive pressure and lower on the side SS with negative pressure. The integral of the pressure distribution on the surface of the wing section provides a force that can be split into two component forces: the lift L, providing the wing supporting action, and the drag D, which produces resistance to the forward movement of the wing and corresponds to the power dissipated in viscous effects. Both the lift L and the drag D, with the same airfoil profile, depend on the angle of attack $\alpha$, defined as the angle between the tangent to the chord C of the wing section at the leading edge and the direction of the mean relative speed of the fluid F, measured with respect to a system of reference co-ordinates integral with the wing: when the angle $\alpha$ is varied, the values of the lift L and the drag D vary, and this is what happens in the current technical solution using mobile ailerons, which are basically wings with variable angle of attack and lift exerted downwards, i.e. with the side PS with positive pressure facing upwards. The operating range of a mobile aileron is generally established so that as the lift L increases, the drag D also increases.

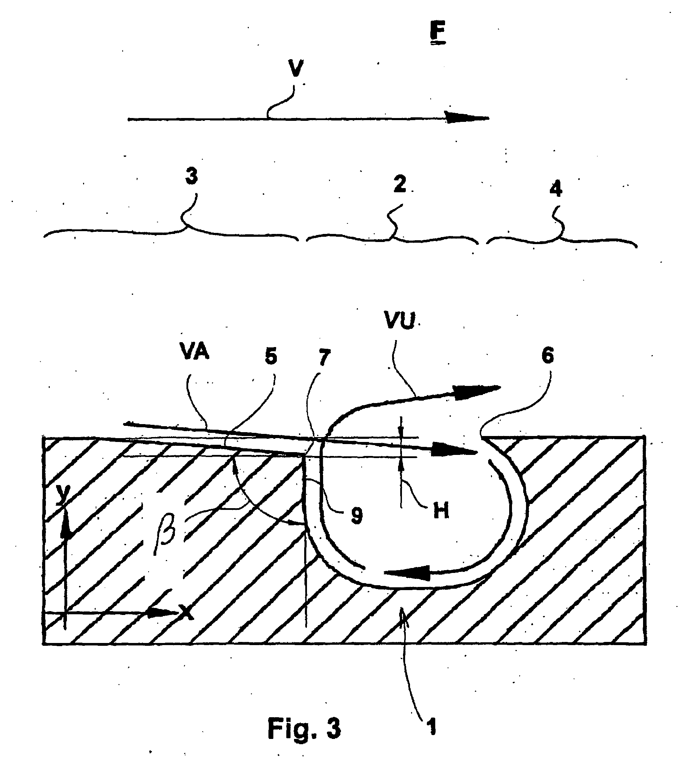

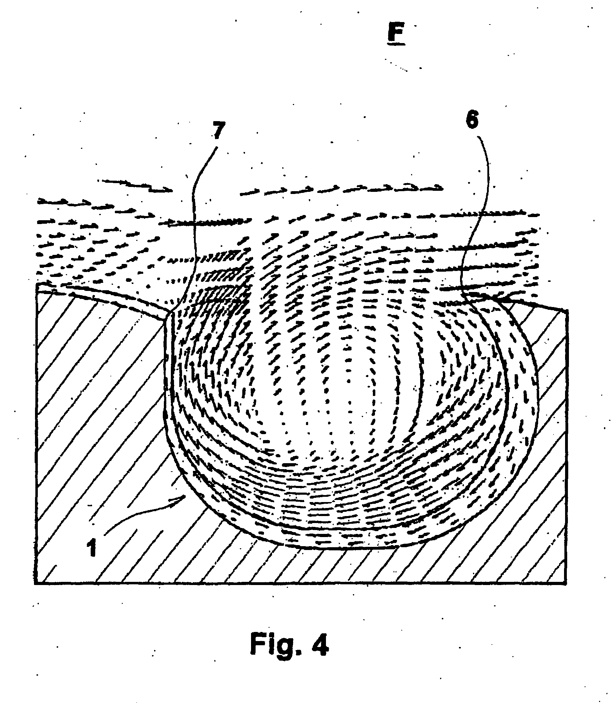

Figure 3 shows the details of a first preferred embodiment of an airfoil according to the present invention, the operating principle of which is the following: the arrow V indicates the direction of the relative movement of the airfoil, near the cavity 1, with respect to a fluid F which is, for example but not necessarily, air, in which the airfoil and the airfoil profile to which it belongs are immersed. V can also indicate the direction of the fluid stream velocity not disturbed by the movement of the supporting surface. It is assumed that the fluid F flows from left to right with reference to the arrangement of Fig. 3; 3 and 4 indicate respectively the area upstream and the area downstream of the aperture of the cavity 1. Figure 3 shows a cross section of an airfoil according to the present invention, according to a section plane vertical and substantially parallel to the direction of the relative movement between the uniform flow F and the airfoil itself; the cavity 1 extends towards the inside of the airfoil profile or body, defines an internal space 1 preferably, but not necessarily, rounded with relatively long radii of curvature in order not to obstruct the flow of as large as possible a vortex inside it, and is provided with an aperture 2 which faces the outside and towards the fluid F. The aperture 2 has edges 6, 7, preferably sharp or, taking account of the inevitable machining tolerances, with chamfers or radii sufficiently small and negligible with respect, for example, to the curves of the inside of the cavity 1, as a specialist technician will be able to determine on a time by time basis. According to an aspect of the present invention, the edge upstream 7 of the aperture 2 is not at the same level as the edge 6 downstream of the aperture, but lays lower of a predetermined distance H.

In addition, upstream of the edge 7 positioned upstream of the aperture is a gradually downward-sloping area 5, for example in the shape of a sloping flat surface, designed to gently deflect inside the cavity 1 a part of the fluid stream F that flows on the external surface 8. Alternatively, the sloping surface 5 can be a curved surface with progressively increasing angle as it nears the edge 7, creating an inlet with as dull a shape as possible, to divert part of the air flow that flows along the supporting surface, inside the cavity 1. The gradually downward-sloping surface 5 terminates at one end with the edge upstream 7. Owing to the difference in the distance H between the edges upstream 7 and downstream 6, airstream VA, or other fluid, enters the cavity 1, sets up a vortex, shown in Figure 3 in clockwise direction, and flows out of the cavity 1 again through the aperture 2 with a jet of air VU transversal to the external fluid stream which arrives from upstream of the cavity 1 and skims the aileron.

The numerical simulation schematised in Figure 4 shows how, according to the present solution, in cavity 1 we have a voluminous flow of incoming and outgoing air, where the component of the outgoing jet VU, transversal to the flow VA which runs over the cavity 1, is fairly large; this intermittent outgoing jet VU periodically interfers with the boundary layer of the fluid F which flows along the pressurised surface PS generating additional turbulence and thus increasing the drag of the stabiliser and its drag.

The surface 9 of the cavity 1 immediately downstream of the edge upstream 7 forms with the sloping surface 5 an angle β - preferably between 75° and 135° - in order not to obstruct the flow of the vortex inside cavity 1 and setting up of the outgoing jet of air VU transversally to the air stream VA flowing over the cavity 1.

The jet of air VU flowing out of the cavity 1 pulsates at the approximate frequency resulting from the following formula

$$f = v/p$$

where f is the frequency, v the relative velocity between airfoil and the uniform flow, and p is the effective perimeter of the cavity.

The section of cavity 1 shown schematically in Figures 3, 4 can be made in different embodiments, for example to produce one or more elongated slots that extend transversally to the fluid streams flowing on the airfoil according to the design direction, or to produce one or more cavities with squat and/or round, spherical, oval volume etc.

According to a further aspect of the present invention, one or more cavities 1 are arranged on the side PS with positive pressure of a airfoil profile, aileron or other aerodynamic appendix, for example more than 5-10 cavities spaced in the direction of the relative movement. This, for example in the case of a negative lift stabiliser for Formula 1 cars, increases both the lift P and the drag D.

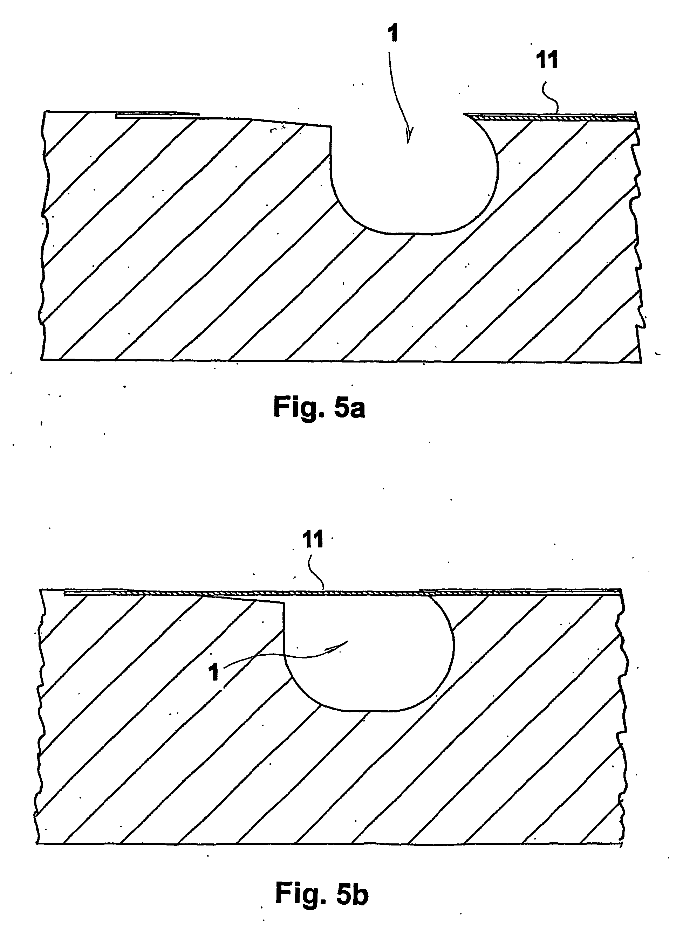

According to a further preferred embodiment of the present invention, illustrated in Figures 5a, 5b, the apertures 2 of the cavities 1 are opened and closed by a partition or sliding or concealed strip 11 moved by appropriate drive devices: in an automotive application, for example when the driver operates the brake, the partition 11 gradually uncovers a number of cavities 1 for example proportional to the pressure on the brake pedal, or according to the commands of the vehicle control computer, permitting progressive and adjustable increase in the negative lift and drag D of the stabilisers, or other aerodynamic appendixes, even though they have a fixed setting angle. This increased braking and negative lift action increases the stability of the vehicle during braking.

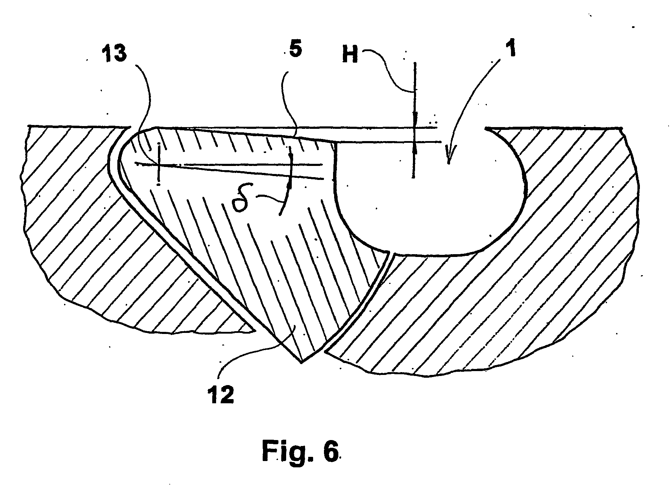

Figure 6 shows a further form of preferred embodiment of a device for varying the braking action of a cavity according to the present invention: according to said form of embodiment, the extent of the jet VU, and therefore of the braking action, is adjusted by varying the angle of the gradually retracting surface 5, obtained on a horizontally pivoting element 12 appropriately hinged on an axis 13. By rotating the element 12 clockwise by an angle δ, the distance H increases and with it the braking action of the cavities, while by rotating the element 12 anticlockwise, the distance H can be reduced to zero: in this case the braking action of the cavity 1 becomes negligible, and the situation is similar, in certain aspects, to that of the "captive vortex cavities" previously discussed.

Another particular application concerns the wings of aircraft: by creating an appropriate number of cavities 1 on the lower surface, with positive pressure, of the wing of an aircraft, the gradual uncovering of said cavities 1 generates additional lift P and drag D, in the same way as the mobile ailerons currently used. These can therefore be replaced by a system of progressively operated cavities 1, safer, with fewer mobile parts and therefore more reliable, less expensive and easier to install, adjust and maintain, for example in appropriate areas of aircraft wings. The embodiments described above are intended to be illustrative and not restrictive and are therefore subject to numerous other modifications, variations and applications that will be apparent to a man skilled in the art, while remaining within the scope of the present invention, which for example can be applied to all cases, not only automotive or aeronautical, in which it is desirable to improve the braking and lift capacity of an airfoil profile: for example the internal cavity 1 can have various shapes, not necessarily rounded, and its internal volume can be varied for example by means of a piston, cam or gear system.

**Claims**

1. Airfoil having an external surface adapted to be skimmed by a fluid (F) in relative movement with it in a predetermined direction, and comprising at least one cavity (1) provided with an aperture (2) in correspondence with said external surface, said aperture being defined by a first edge (7) upstream of said cavity (1), in the direction of the fluid flow (F) with respect to the external surface, and a second edge (6) downstream of said cavity (1), said first and second edges being arranged substantially transversally to said predetermined direction of relative movement, said first edge (7) being in a reentrant position with respect to said second edge (6) by a pre-defined distance (H) with reference to said external surface, **characterised in that**

   a) in correspondence of at least one cavity (1), there is provided an area (5) located upstream of said first edge (7), which is gradually reentrant from said external surface towards the respective cavity (1) in order to divert part of the flow of the fluid F, which skims the outer surface, into the respective cavity,
   b) said at least one cavity (1) has a section, on a plane parallel to the direction of the fluid (F), with substantially squat and/or rounded shape,
   c) said at least one cavity is located on the side of the airfoil producing positive pressure (PS) during its movement in the fluid (F),
   d) whereby the flow outgoing from the cavity interfers with the boundary layer on the surface of the aerofoil, thus generating turbulence and increasing the drag of the aerofoil.

2. Airfoil section according to claim 1, wherein the gradually reentrant area (5) has a flat surface.

3. Airfoil section according to claim 1, wherein said first edge (7) corresponds to the edge of an angle (β), of value between 75° and 135°, formed by said reentrant area (5) of the outer surface and by the internal wall of the respective cavity (1).

4. Airfoil section according to one of the previous claims, wherein the cavity (1) consists substantially of a slot that extends transversally to the direction of the fluid (F).

5. Airfoil section according to claim 1, in which said cavity (1) features a section, on a plane parallel to the direction of the fluid (F), with substantially squat and/or rounded shape.

6. Airfoil section according to one of the previous claims, provided with devices (11) for closing the aperture (2) of at least one cavity (1).

7. Airfoil section according to claim 7, in which the closing devices (11) comprise a mobile partition or strip.

8. Airfoil section according to claim 1, in which said pre-defined distance (H) can be varied by operating mechanisms over a range with minimum value near to zero and a predetermined maximum value.

9. Airfoil section according to claim 8, **characterised in that** the distance (H) can be varied by varying the angle of said reentrant area (5) upstream of the first edge (7).

10. Airfoil adapted to move in a fluid in relative movement with respect to it, provided with a side (SS) with negative pressure and a side (PS) with positive pressure, **characterised in that** it comprises in an area of the external surface with features according to one or more of the previous claims.

**Patentansprüche**

1. Tragfläche mit einer Außenoberfläche, welche von einem Fluid (F) in Relativbewegung zu ihr, in einer vorherbestimmten Richtung umströmt werden kann, und welche umfasst, zumindest einen Hohlraum (1) mit einer Öffnung (2) in Übereinstimmung mit der Außenoberfläche, wobei die Öffnung definiert wird durch, eine erste Kante (7), stromaufwärts zu dem Hohlraum (1) gelegen, und mit Bezug auf die Außenoberfläche in Richtung zum Fluidstrom (F) gelegen, und eine zweite Kante (6), stromabwärts zu dem Hohlraum (1) gelegen, wobei erste und zweite Kanten im Wesentlichen quer zu der vorherbestimmten Richtung der Relativbewegung angeordnet sind, und wobei die erste Kante (7) sich in einer Zulaufposition mit Bezug auf die zweite Kante (6) befindet, in einem vorherdefinierten Abstand (H) mit Bezug auf die Außenoberfläche, **dadurch gekennzeichnet, dass**

a) in Übereinstimmung mit zumindest einem Hohlraum (1) eine stromaufwärts zu der ersten Kante (7) gelegene Fläche (5) vorgesehen ist, welche graduell ausgehend von der Außenoberfläche auf den entsprechenden Hohlraum (1) zuläuft, um einen Teil des an der Außenoberfläche entlang strömenden Fluidstroms (F) in den entsprechenden Hohlraum umzulenken,

b) zumindest ein Hohlraum (1) einen Querschnitt aufweist, in einer Ebene parallel zu der Richtung des Fluidstroms (F), mit einer im Wesentlichen untersetzten und/oder abgerundeten Form,

c) zumindest ein Hohlraum auf der Tragflächenseite angeordnet ist, welche einen positiven Druck (PS) während der Bewegung der Tragfläche im Fluid (F) erzeugt,

d) wobei der aus dem Hohlraum austretende Strom die Grenzschicht auf der Tragflächenoberfläche stört, folglich eine Turbulenz erzeugt, und den Widerstand der Tragfläche erhöht.

2. Tragflächenquerschnitt gemäß Anspruch 1, wobei die graduell zulaufende Fläche (5) eine ebene Oberfläche aufweist.

3. Tragflächenquerschnitt gemäß Anspruch 1, wobei die erste Kante (7) mit einer Kante von einem Winkel ($\beta$) mit einem Wert zwischen 75 Grad und 135 Grad übereinstimmt, gebildet durch die Zulauffläche (5) der Außenoberfläche und durch die Innenwand des entsprechenden Hohlraums (1).

4. Tragflächenquerschnitt gemäß einem der vorherigen Ansprüche, wobei der Hohlraum (1) im Wesentlichen aus einem Schlitz besteht, welcher sich quer zu der Richtung des Fluidstroms (F) erstreckt.

5. Tragflächenquerschnitt gemäß Anspruch 1, bei welchem der Hohlraum (1) einen Querschnitt kennzeichnet, auf einer Ebene parallel zu der Richtung des Fluidstroms (F), mit einer im Wesentlichen untersetzten und/oder abgerundeten Form.

6. Tragflächenquerschnitt gemäß einem der vorherigen Ansprüche, versehen mit Vorrichtungen (11) zum Verschließen der Öffnung (2) von zumindest einem Hohlraum (1).

7. Tragflächenquerschnitt gemäß Anspruch 7, bei welchem die Schließvorrichtungen (11) eine mobile Trennwand oder ein Band umfassen.

8. Tragflächenquerschnitt gemäß Anspruch 1, bei welchem der vorherdefinierte Abstand (H) variiert werden kann, indem ein Mechanismus über einen Bereich mit einem Minimalwert nahe Null und einem vorherbestimmten Maximalwert betätigt wird.

9. Tragflächenquerschnitt gemäß Anspruch 8, **dadurch gekennzeichnet, dass** der Abstand (H) variiert werden kann, indem der Winkel der Zulauffläche (5), stromaufwärts zu der ersten Kante (7) gelegen, variiert wird.

10. Tragfläche, welche in einem Fluid in Relativbewegung mit Bezug auf das Fluid bewegt werden kann, versehen mit einer Seite (SS) mit einem negativen Druck, und einer Seite (PS) mit einem positiven Druck, **dadurch gekennzeichnet, dass** sie in einem Bereich der Außenoberfläche Merkmale gemäß einem oder mehreren der vorherigen Ansprüche umfasst.

**Revendications**

1. Profil aérodynamique présentant une surface extérieure adaptée pour être balayée superficiellement par un fluide (F) en mouvement relatif par rapport audit profil dans une direction prédéfinie, et comprenant au moins une cavité (1) comportant une ouverture (2) en correspondance avec ladite surface extérieure, ladite ouverture étant définie par un premier bord (7) situé en amont de ladite cavité (1), dans la direction d'écoulement du fluide (F) par rapport à la surface extérieure, et un second bord (6) situé en aval de ladite cavité (1), lesdits premier et second bords étant agencés de manière sensiblement transversale à ladite direction de mouvement relatif prédéfinie, ledit premier bord (7) étant dans une position rentrante par rapport audit second bord (6) sur une distance prédéfinie (H) par rapport à ladite surface extérieure, **caractérisé en ce que** :

a) en correspondance à au moins une cavité (1), il est prévu une zone (5) située en amont dudit premier bord (7), qui est graduellement rentrante à partir de ladite surface extérieure en direction de la cavité respective (1) de telle manière à dévier une partie de l'écoulement du fluide F, balayant superficiellement la surface extérieure, vers l'intérieur de la cavité respective,

b) ladite ou chaque cavité (1) présente une section, suivant un plan parallèle à la direction du fluide (F), qui est de forme sensiblement évasée et/ou arrondie,

c) ladite ou chaque cavité est située sur la face du profil aérodynamique créant une pression positive (PS) lors de son déplacement dans le fluide (F),

d) de telle manière que l'écoulement sortant de la cavité interfère avec la couche limite sur la surface du profil aérodynamique, avec pour effet de générer une turbulence et d'augmenter la traînée du profil aérodynamique.

2. Profil aérodynamique selon la revendication 1, dans lequel la zone progressivement rentrante (5) présente une surface plane.

3. Profil aérodynamique selon la revendication 1, dans lequel ledit premier bord (7) correspond au bord définissant un angle (β), de valeur comprise entre 75° et 135°, formé par ladite zone rentrante (5) de la surface extérieure et par la paroi interne de la cavité respective (1).

4. Profil aérodynamique selon l'une quelconque des revendications précédentes, dans lequel la cavité (1) consiste sensiblement en une fente qui s'étend transversalement à la direction du fluide (F).

5. Profil aérodynamique selon la revendication 1, dans lequel ladite cavité (1) présente une section, suivant un plan parallèle à la direction du fluide (F), qui est de forme sensiblement évasée et/ou arrondie.

6. Profil aérodynamique selon l'une quelconque des revendications précédentes, pourvu de dispositifs (11) pour obturer l'ouverture (2) d'au moins une cavité (1).

7. Profil aérodynamique selon la revendication 6, dans lequel les dispositifs d'obturation (11) comprennent une cloison ou une bande mobile .

8. Profil aérodynamique selon la revendication 1, dans lequel ladite distance prédéfinie (H) peut être réglée au moyen de mécanismes d'actionnement sur une plage comprise entre une valeur minimale proche de zéro et une valeur maximale prédéfinie.

9. Profil aérodynamique selon la revendication 8, **caractérisé en ce que** la distance (H) peut être réglée en faisant varier l'inclinaison de ladite zone rentrante (5) située en amont du premier bord (7).

10. Profil aérodynamique prévu pour se déplacer dans un fluide en mouvement relatif par rapport audit profil, comportant une face (SS) de pression négative et une face (PS) de pression positive, **caractérisé en ce qu'**il présente dans une région de la surface extérieure des caractéristiques conformes à une ou plusieurs des revendications précédentes.

**Fig. 1**

SS

PS

**Fig. 2**

L

D

α

V

C

**Fig. 3**

**Fig. 4**

Fig. 5a

Fig. 5b

**Fig. 6**